(19) **Europäisches Patentamt**

**European Patent Office**

**Office européen des brevets**

(11) **EP 1 277 636 B1**

(12) **EUROPÄISCHE PATENTSCHRIFT**

(45) Veröffentlichungstag und Bekanntmachung des Hinweises auf die Patenterteilung:
**01.03.2006  Patentblatt 2006/09**

(51) Int Cl.:
*B60T 13/14* *(2006.01)*

(21) Anmeldenummer: **02014667.6**

(22) Anmeldetag: **03.07.2002**

(54) **Fahrzeugbremssystem**

Brake system for vehicles

Système de freinage pour véhicules

(84) Benannte Vertragsstaaten:
**DE ES FR GB**

(30) Priorität: **11.07.2001  US 903167**

(43) Veröffentlichungstag der Anmeldung:
**22.01.2003  Patentblatt 2003/04**

(73) Patentinhaber: **DEERE & COMPANY**
**Moline, Illinois 61265-8098 (US)**

(72) Erfinder:
• **Dunbar, Scott, David**
  **Cedar Falls, IA 50613 (US)**
• **Alexander, William, Guy**
  **Waterloo, IA 50701 (US)**
• **Wallestad, Steven, Daniel**
  **Cedar Falls, IA 50613 (US)**

(74) Vertreter: **Lau-Loskill, Philipp**
**Deere & Company,**
**European Office,**
**Patent Department**
**68140 Mannheim (DE)**

(56) Entgegenhaltungen:
**DE-A- 3 208 393        DE-A- 3 513 758**
**DE-A- 3 929 492        DE-A- 19 635 589**
**US-A- 3 386 775        US-A- 5 222 787**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Fahrzeugbremssystem mit einer Hauptversorgungspumpe, wenigstens einer Betriebsbremse und einem Betriebsbremsventil, welches mit der Hauptversorgungspumpe und der Betriebsbremse verbunden ist und welches die Betriebsbremse in Abhängigkeit von Betreiberoperationen steuert. Des Weiteren ist wenigstens eine Sekundärbremse enthalten.

In einigen Ländern, wie z. B. in Europa, gibt es Vorschriften für Geländefahrzeuge, wie z. B. Schlepper, die ein zweites Bremssystem verlangen, das den Schlepper abzubremsen hilft, wenn der Schlepper bei höheren Geschwindigkeiten gefahren wird. Alle in Europa verkauften Schlepper besitzen Betriebsbremsen, die an der Hinterachse bremsen und durch voneinander unabhängige Bremspedale betätigt werden. Üblicherweise ist ein manuell betätigbarer Bremshebel vorgesehen, mit dem ein sekundäres Bremssystem (die Vorderbremsen) betätigt wird. Derartige Systeme aktivieren die Sekundärbremse zur Unterstützung des Bremsvorgangs jedoch nicht, wenn beide Bremspedale gleichzeitig betätigt sind und bei derartigen Systemen erfolgt die Betätigung der Sekundärbremsen nicht in Abhängigkeit des Bremsdruckes.

Das Dokument DE3513758A offenbart ein System nach dem Oberbegriff des Anspruchs 1.

Die der Erfindung zugrunde liegende Aufgabe wird darin gesehen, ein Fahrzeugbremssystem der eingangs genannten Art anzugeben, durch welches die vorgenannten Probleme überwunden werden. Insbesondere soll ein Fahrzeugbremssystem vorgeschlagen werden, durch das die Sekundärbremse zur unterstützenden Abbremsung des Schleppers aktiviert wird, wenn die Betriebsbremspedale gleichzeitig betätigt sind.

Des Weiteren besteht die Aufgabe darin, ein derartiges Fahrzeugbremssystem vorzuschlagen, welches die Betätigung der Sekundärbremse in Abhängigkeit des Bremsdruckes variiert.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird bei einem eingangs genannten Fahrzeugbremsventil ein elektrohydraulisches Sekundärbremsventil eingesetzt, welches die Sekundärbremse in Abhängigkeit von einem elektronischen Kontrollsignal steuert. Wenigstens ein Betriebsbremsensensor erzeugt Signale, die den Betriebsstatus der Betriebsbremse wiedergeben, ein Betriebsbremsdrucksensor erzeugt ein Betriebsbremsdrucksignal, das den Bremsdruck der Betriebsbremse wiedergibt und ein Sekundärbremsdrucksensor erzeugt ein Sekundärbremsdrucksignal, das den Bremsdruck der Sekundärbremse wiedergibt. Des Weiteren ist eine elektronische Kontrolleinheit enthalten, an welche der Betriebsbremsensensor, die Bremsdrucksensoren und das Sekundärbremsventil angeschlossen sind, wobei die Kontrolleinheit das Kontrollsignal als Funktion des Betriebsstatus der Betriebsbremse und der Bremsdrucksignale erzeugt.

In einer bevorzugten Ausführungsform der Erfindung ist die Hauptversorgungspumpe als Hydraulikpumpe ausgebildet und fördert die für die Betriebsbremse notwendige Bremsflüssigkeit.

In einer besonders bevorzugten Ausführungsform wird zur Versorgung der Sekundärbremse eine zweite, verstellbare Versorgungspumpe eingesetzt, welche unabhängig von der Hauptversorgungspumpe arbeitet und die Sekundärbremse versorgt.

In einer weiteren besonders bevorzugten Ausführungsform der Erfindung enthält die Betriebsbremse wenigstens eine linke und eine rechte Betriebsbremse, wobei jede durch das Betriebsbremsventil operativ an ein zugehöriges linkes und rechtes Betriebsbremspedal gekoppelt ist. Vorzugsweise erfolgen dabei die die Betriebsbremse steuernden Betreiberoperationen durch wahlweise Betätigung eines oder beider Betriebsbremspedale.

In einer weiteren besonders bevorzugten Ausführungsform der Erfindung ist das Sekundärbremsventil als ein magnetspulengesteuertes, proportionales Druckreduzierventil ausgebildet. Die darin enthaltene Magnetspule ermöglicht ein schnelles Öffnen und Schließen des Ventils proportional zu dem von der elektronischen Kontrolleinheit erzeugten Steuerstrom.

In einer weiteren bevorzugten Ausführungsform der Erfindung enthält der Betriebsbremsensensor einen linken und einen rechten Betriebsbremsenschalter, der jeweils mit dem korrespondierenden Bremspedal gekoppelt ist. Dadurch können Statussignale erzeugt werden, die der elektronischen Kontrolleinheit die Information liefern, ob beide Bremspedale betätigt werden.

In einer weiteren bevorzugten Ausführungsform der Erfindung ist ein für die Sekundärbremsen vorgesehener manuell betätigbarer Bremshebel und ein zugehöriger Bremshebelpositionssensor enthalten, der der elektronischen Kontrolleinheit ein Bremshebelpositionssignal liefert. Die elektronische Kontrolleinheit kann dieses Signal verarbeiten und derart berücksichtigen, dass das Sekundärbremsventil als Funktion des Betriebsstatus der Betriebsbremse, der Bremsdrucksignale und des Bremshebelpositionssignals gesteuert wird. So können beispielsweise die Sekundärbremsen optional manuell und unabhängig von den Betriebsbremsen betätigt werden, was dann im Steuersignal berücksichtigt werden kann. Des Weiteren ist ein Statussensor vorgesehen, der erfasst, ob sich der Bremshebel in einer Grundposition befindet oder aus dieser ausgerückt ist. Der Statussensor gibt ein Statussignal an die Kontrolleinheit weiter, welche das Statussignal bei der Erzeugung des Kontrollsignals berücksichtigt. In diesem Fall erzeugt die elektronische Kontrolleinheit das Kontrollsignal als Funktion des Betriebsstatus der Betriebsbremse, der Bremsdrucksignale, des Bremshebelpositionssignals und des Statussignals.

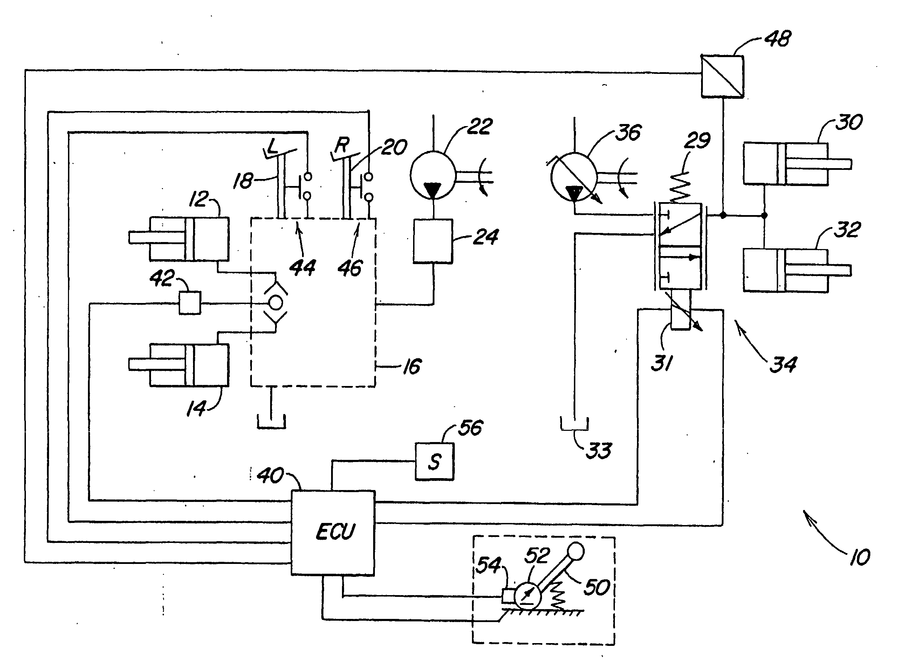

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Die einzige Figur zeigt das schematische Schaltbild einer erfindungsgemäßen Bremsanlage.

Die Figur zeigt eine Bremsanlage 10 mit linker und rechter Hinterbremse oder Betriebsbremse 12, 14, welche durch ein Hetriebsbremsventil 16 in Abhängigkeit von einem linken und einem rechten Betriebsbremspedal 18, 20 angesteuert werden. Das Ventil 16 wird von einer verbrennungsmotorgetriebenen Hauptversorgungspumpe 22 über ein Vorrangventil 24 mit druckbeaufschlagter Hydraulikflüssigkeit versorgt.

Die linke und die rechte Vorderbremse oder Sekundärbremse 30, 32 wird über ein magnetspulengesteuertes, elektrohydraulisches, im Normalfall geschlossenes, proportionales Druckreduzierventil 34 angesteuert, welches druckbeaufschlagte Flüssigkeit von einer verstellbaren Sekundärversorgungspumpe 36 erhält und welches durch eine elektronische Kontrolleinheit (ECU) 40 angesteuert wird. Eine Feder 29 bewegt das Sekundärbremsventil 34 in eine geschlossene Stellung, in der die Verbindung zwischen Sekundärversorgungspumpe 36 und Sekundärbremsen 30, 32 unterbrochen ist und in der die Sekundärbremsen 30, 32 direkt mit einem Hydrauliksumpf 33 in Verbindung stehen, wenn eine Magnetspule 31 abgeschaltet ist. Das Sekundärbremsventil 34 verbindet die Sekundärbremsen 30, 32 direkt mit der Sekundärversorgungspumpe 36, sofern die Magnetspule 31 eingeschaltet ist.

Ein Drucksensor 42 an den Betriebsbremsen 12, 14 liefert ein Betriebsbremsdrucksignal an die ECU 40. Linke und rechte, mit der ECU 40 verbundene und normalerweise geöffnete Betriebsbremsenschalter 44, 46 werden bei Aktivierung der Bremspedale 18, 20 geschlossen und liefern der ECU 40 Signale, die den Status der Betriebsbremsen 18, 20 wiedergeben. Ein Drucksensor 48 an den Sekundärbremsen 30, 32 liefert als Rückmeldesignal für die Regelkreissteuerung der Sekundärbremsen 30, 32 ein Sekundärbremsdrucksignal an die ECU 40.

Optional kann ein mit der Hand betätigbarer Bremshebel 50 vorgesehen sein, der die Sekundärbremsen 30, 32 unabhängig von den Betriebsbremsen 12, 14 betätigt. Ein berührungslos arbeitender Bremshebelpositionssensor 52 liefert ein Bremshebelpositionssignal an die ECU 40. Eine Schaltereinheit 54, wie z.B. eine einpolige Umschalteinheit, ist mit dem Bremshebel 50 verbunden und liefert der ECU 40 ein "im Eingriff"/"nicht im Eingriff" Statussignal für den Bremshebel 50, welches anzeigt, ob sich der Bremshebel 50 in seiner abgesenkten Grundposition befindet, oder ob er zum Bremsen nach oben angezogen ist. Die Schaltereinheit 54 enthält einen eingeschalteten Schalter (nicht gezeigt), welcher schließt, wenn der Bremshebel 50 angezogen ist und einen ausgeschalteten Schalter (nicht gezeigt), welcher öffnet, wenn der Bremshebel 50 angezogen ist. Des Weiteren empfängt die ECU 40 von einem Geschwindigkeitssensor 56 ein Fahrzeuggeschwindigkeitssignal.

Die ECU 40 empfängt die oben genannten Eingangssignale und liefert an das Sekundärbremsventil 34, als Antwort darauf, einen pulsweiten-modulierten, temperatur- und spannungskompensierten Magnetspulen-Steuerstrom, mit einer Stromkomponente des Bremshebels 50 (einem Strom, der in Zusammenhang mit der Auslenkung des Bremshebels 50 steht) und mit einer Stromkomponente, die den Sekundärbremsdruck repräsentiert. Unter Normalbedingungen steuert die ECU 40 den Strom für das Magnetspulen-Sekundärventil 34 proportional zur Höhenlage des Bremshebels 50 und zum Sekundärbremsdrucksignal des Drucksensors 48. Wenn der Bremshebel 50 angezogen wird, so nimmt die Stromkomponente des Bremshebels 50 in dem Maße zu, wie die Höhenlage des Bremshebels 50 zunimmt.

Wenn die Geschwindigkeit des Bremshebels 50 kleiner als 10.0% seines maximalen Bremshebelweges oder seines Bewegungsspielraums pro Sekunde beträgt, dann ist die Stromkomponente des Sekundärbremsdruckes proportional zur Differenz zwischen dem Sekundärbremsdruck und einem an der Stromkomponente des Bremshebels 50 erwarteten Druck. Der erwartete Druck verhält sich dabei linear zur Stromkomponente des Bremshebels 50. Die Stromkomponente des Sekundärbremsdrucks sollte ein integrierter Wert sein, der nach folgender Gleichung definiert ist:

```
Stromkomponente für den Sekundärbremsdruck = Stromkomponente
für den Sekundärbremsdruck + (erwarteter Druck –
Sekundärbremsdruck) x Koeffizient.
```

Wenn die Stromkomponente für den Bremshebel 50 ungleich Null ist, dann soll der Sekundärbremsen-Magnetspulenstrom (Magnetspulen-Steuerstrom) die algebraische Summe aus den Stromkomponenten des Bremshebels 50 und des Sekundärbremsdruckes sein, anderenfalls (wenn die Stromkomponente für den Bremshebel 50 gleich Null ist) soll der Sekundärbremsen-Magnetspulenstrom Null Ampere [A] betragen (außer wenn die ECU 40 alle 1000 Sekunden für einen Zeitraum von 0,5 Sekunden einen Signalstrom von 100 mA liefern soll, um zu prüfen ob der Magnetspulenstromkreis intakt ist).

Bei Feststellung eines fehlerhaften Zustands, überträgt die ECU 40 ein Warnsignal zum Fahrzeugbetreiber, schaltet beispielsweise eine Warnleuchte ein, und liefert Strom an das Magnetspulenventil 34 der Sekundärbremsen 30, 32 wie im Folgenden erläutert. Bei einer Fehlfunktion des Bremshebelpositionssensors 52 soll der Stromwert auf demselben Stromwert verbleiben der vor dem Fehler vorlag. Im Anschluss daran sollen die Stromwerte von der Schaltereinheit 54 gesteuert und der Druck durch den Sensor 48 aufgenommen werden. Bei einer Fehlfunktion der Schaltereinheit 54 soll der Stromwert proportional zur Bremshebelposition und dem vom Sensor 48 gemessenen Druck verbleiben. Bei einer Fehlfunktion des Drucksensors 48 der Sekundärbremsen 30, 32 soll der Stromwert nur proportional zur Position des Bremshebels 50 sein. Bei einer Fehlfunktion der Magnetspule 31 des Sekundärbremsventils 34 soll der Stromwert Null betragen.

Die ECU 40 erzeugt des Weiteren die folgenden Betriebsbremsfunktionen. Unter Normalbedingungen steuert die ECU 40 den Strom für das Sekundärbremsventil 34 im Verhältnis zum linken und rechten Bremspedal 18, 20, zum Betriebsbremsdruck und zum Sekundärbremsdruck. Während beide Bremspedale 18, 20 gedrückt sind und der Betriebsbremsdruck zunimmt, steigt die Stromkomponente des Betriebsbremsdrucks (eine Stromkomponente die mit dem Betriebsbremsdruck zusammenhängt) so an, wie die Stromkomponente des Bremshebels 50.

Entsprechend der Funktion der Sekundärbremsen 30, 32, ist die Stromkomponente des Sekundärbremsdrucks vorzugsweise proportional zur Differenz von Sekundärbremsdruck und einem erwarteten Druck (am Betriebsbremsdruckstrom abgeschätzt). Der erwartete Druck ist dabei linear bezüglich des Betriebsbremsdruckstromes. Die Stromkomponente des Sekundärbremsdrucks sollte ein integrierter Wert sein, der nach folgender Gleichung definiert ist:

```
Stromkomponente für den Sekundärbremsdruck = Stromkomponente
für den Sekundärbremsdruck + (erwarteter Druck -
Sekundärbremsdruck) x Koeffizient.
```

Wenn die Stromkomponente des Sekundärbremsdrucks Null ist, soll der Sekundärbremsen-Magnetspulenstrom (Magnetspulen-Steuerstrom) die algebraische Summe aus den Stromkomponenten des Betriebsbremsdruckes und des Sekundärbremsdruckes sein.

Anderenfalls soll der Sekundärbremsen-Magnetspulenstrom Null Ampere [A] betragen (außer wenn die ECU 40 alle 1000 Sekunden für einen Zeitraum von 0,5 Sekunden einen Signalstrom von 100 mA liefern soll, um zu prüfen ob der Magnetspulenstromkreis intakt ist).

Bei Feststellung eines fehlerhaften Zustands, überträgt die ECU 40 ein Warnsignal zum Fahrzeugbetreiber und liefert Strom an das Magnetspulenventil 34 der Sekundärbremsen 30, 32 wie folgt.

Bei einer Fehlfunktion des Drucksensors 48 der Sekundärbremsen 30, 32 soll der Stromwert nur proportional zum Betriebsbremsdruckstrom sein. Bei einer Fehlfunktion des Drucksensors 42 der Betriebsbremse und bei nicht betätigten Bremspedalen 18, 20, soll der Stromwert Null betragen. Bei einer Fehlfunktion des Drucksensors 42 der Betriebsbremse und bei betätigten Bremspedalen 18, 20, generiert die ECU 40, der proportional zur Geschwindigkeit ist, die von dem Geschwindigkeitssensor 56 erfasst wurde. Bei einer Fehlfunktion des Stromkreises, inklusive der Magnetspule 31 des Sekundärbremsventils 34 erzeugt die ECU 40 einen Stromwert von Null.

Unter Normalbedingungen steuert die ECU 40 den Strom für die Magnetspule 31 des Sekundärbremsen-Magnetspulenventils 34 relativ zur Größeren der Stromkomponente des Betriebsbremsdrucks und der Stromkomponente des Bremshebels 50.

Vorzugsweise ist der Bremshebel 50 so kalibriert, dass ein oberer und ein unterer ermittelter Spannungswert mit dem Betätigungsweg des Bremshebels 50 korrespondiert. Das Sekundärbremsventil 34 ist ebenfalls kalibriert, um seine Totzone, oder seinen Schwellwert, an dem das Ventil 34 sich zu öffnen beginnt, zu bestimmen. Ein Kalibriervorgang kann ebenfalls genutzt werden, um die Funktionsfähigkeit des Bremshebels 50, des Sekundärbremsventils 34 und der Sekundärbremsdruck- und Betriebsbremsdrucksensoren 48, 42 zu überprüfen.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

**Patentansprüche**

1. Fahrzeugbremssystem mit:

   - einer Hauptversorgungspumpe (22),
   - wenigstens einer Betriebsbremse (12, 14),

- einem Betriebsbremsventil (16), welches mit der Hauptversorgungspumpe (22) und der Betriebsbremse (12, 14) verbunden ist und welches die Betriebsbremse (12, 14) in Abhängigkeit von Betreiberoperationen steuert und
- wenigstens einer Sekundärbremse (30, 32),

**gekennzeichnet durch** ein elektrohydraulisches Sekundärbremsventil (34), welches die Sekundärbremse (30, 32) in Abhängigkeit von einem elektronischen Signal steuert, wenigstens einen Betriebsbremsensor (44, 46), welcher den Betriebsstatus der Betriebsbremse (12, 14) wiedergebende Signale erzeugt, einen Betriebsbremsdrucksensor (42) zur Erzeugung eines den Bremsdruck der Betriebsbremse (12, 14) wiedergebenden Betriebsbremsdrucksignals, einen Sekundärbremsdrucksensor (48) zur Erzeugung eines den Bremsdruck der Sekundärbremse (30, 32) wiedergebenden Sekundärbremsdrucksignals, und einer elektronischen Kontrolleinheit (40), an welche der Betriebsbremsensor (44, 46), die Bremsdrucksensoren (42, 48) und das Sekundärbremsventil (34) angeschlossen sind, wobei die Kontrolleinheit (40) ein Kontrollsignal als Funktion des Betriebsstatus der Betriebsbremse (12, 14) und der Bremsdrucksignale erzeugt.

2. Fahrzeugbremssystem nach Anspruch 1, **dadurch gekennzeichnet, dass** die Hauptversorgungspumpe (22) als eine Hydraulikpumpe ausgebildet ist.

3. Fahrzeugbremssystem nach Anspruch 1 oder 2, **dadurch gekennzeichnet, dass** eine sekundäre verstellbare Versorgungspumpe (36) enthalten ist.

4. Fahrzeugbremssystem nach einem der vorhergehenden Ansprüche, **dadurch gekennzeichnet, dass** die Betriebsbremse (12, 14) eine linke und eine rechte Betriebsbremse enthält, wobei jede durch das Betriebsbremsventil (16) operativ an ein zugehöriges linkes und rechtes Betriebsbremspedal (18, 20) gekoppelt ist.

5. Fahrzeugbremssystem nach einem der vorhergehenden Ansprüche, **dadurch gekennzeichnet, dass** die Betreiberoperationen durch Betätigung wenigstens eines Bremspedals (18, 20) erfolgen.

6. Fahrzeugbremssystem nach einem der vorhergehenden Ansprüche, **dadurch gekennzeichnet, dass** das Sekundärbremsventil (34) ein magnetspulengesteuertes, proportionales Druckreduzierventil enthält.

7. Fahrzeugbremssystem nach einem der vorhergehenden Ansprüche, **dadurch gekennzeichnet, dass** der Betriebsbremsensor (44, 46) einen linken und einen rechten Betriebsbremsenschalter enthält, wobei jeder an das jeweils korrespondierend linke und rechte Bremspedal (18, 20) gekoppelt ist.

8. Fahrzeugbremssystem nach einem der vorhergehenden Ansprüche, **dadurch gekennzeichnet, dass** ein manuell betätigbarer Bremshebel (50) enthalten ist.

9. Fahrzeugbremssystem nach Anspruch 8, **dadurch gekennzeichnet, dass** ein Bremshebelpositionssensor (52) enthalten ist, der der elektronischen Kontrolleinheit (40) ein Bremshebelpositionssignal liefert, wobei die elektronische Kontrolleinheit (40) das Kontrollsignal als Funktion des Betriebsstatus der Betriebsbremse, der Bremsdrucksignale und des Bremshebelpositionssignals erzeugt.

10. Fahrzeugbremssystem nach Anspruch 8 oder 9, **dadurch gekennzeichnet, dass** ein Statussensor (54) vorgesehen ist, der erfasst, ob sich der Bremshebel (50) in einer Grundposition befindet oder aus dieser ausgerückt ist, und dass der Statussensor (54) an die Kontrolleinheit (40) angeschlossen ist, welche ein Statussignal bei der Erzeugung des Kontrollsignals berücksichtigt.


**Revendications**

1. Système de freinage pour véhicule automobile comportant :

- une pompe d'alimentation principale (22),
- au moins un frein de service (12, 14),
- une soupape de frein de service (16), qui est reliée à la pompe d'alimentation principale (22) et au frein de service (12, 14) et qui commande le frein de service (12, 14) en fonction des opérations du conducteur, et
- au moins un frein secondaire (30, 32),

**caractérisé par** une soupape de frein secondaire (34) électro-hydraulique, qui commande le frein secondaire (30, 32) en fonction d'un signal électronique, au moins un capteur de frein de service (44, 46) qui génère des signaux reproduisant l'état de fonctionnement du frein de service (12, 14), un capteur de pression du frein de service (42) destiné à générer un signal de pression du frein de service reproduisant la pression de freinage du frein de service (12, 14), un capteur de pression du frein secondaire (48) destiné à générer un signal de pression du frein secondaire reproduisant la pression de freinage du frein secondaire (30, 32), et une unité de contrôle (40) électronique à laquelle sont raccordés le capteur de frein de service (44, 46), les capteurs de pression de freinage (42, 48) et la soupape de frein secondaire (34), l'unité de contrôle (40) générant un signal de contrôle en fonction de l'état de fonctionnement du frein de service (12, 14) et des signaux de pression de freinage.

2. Système de freinage pour véhicule automobile selon la revendication 1, **caractérisé en ce que** la pompe d'alimentation principale (22) est conçue sous forme de pompe hydraulique.

3. Système de freinage pour véhicule automobile selon la revendication 1 ou 2, **caractérisé en ce qu'**il comporte une pompe d'alimentation secondaire (36) réglable.

4. Système de freinage pour véhicule automobile selon l'une quelconque des revendications précédentes, **caractérisé en ce que** le frein de service (12, 14) comporte un frein de service gauche et un frein de service droit, chacun étant couplé de manière opérationnelle, par l'intermédiaire de la soupape de frein de service (16), à une pédale de frein de service (18, 20) gauche et droite correspondante.

5. Système de freinage pour véhicule automobile selon l'une quelconque des revendications précédentes, **caractérisé en ce que** les opérations du conducteur sont exécutées par l'actionnement d'au moins une pédale de frein (18, 20).

6. Système de freinage pour véhicule automobile selon l'une quelconque des revendications précédentes, **caractérisé en ce que** la soupape de frein secondaire (34) comporte un limiteur de pression proportionnel, commandé par une bobine d'excitation.

7. Système de freinage pour véhicule automobile selon l'une quelconque des revendications précédentes, **caractérisé en ce que** le capteur du frein de service (44, 46) comporte un commutateur gauche et un commutateur droit, chacun étant couplé respectivement à la pédale de frein (18, 20) gauche et droite correspondante.

8. Système de freinage pour véhicule automobile selon l'une quelconque des revendications précédentes, **caractérisé en ce qu'**il comporte un levier de frein (50) apte à être manoeuvré à la main.

9. Système de freinage pour véhicule automobile selon la revendication 8, **caractérisé en ce qu'**il comporte un capteur de position du levier de frein (52), qui délivre un signal de position du levier de frein vers l'unité de contrôle (40) électronique, ladite unité de contrôle (40) électronique générant le signal de contrôle en fonction de l'état de fonctionnement du frein de service, des signaux de pression de freinage et du signal de position du levier de frein.

10. Système de freinage pour véhicule automobile selon la revendication 8 ou 9, **caractérisé en ce qu'**il est prévu un capteur d'état (54), qui détecte si le levier de frein (50) est dans une position de base ou est désolidarisé de celle-ci, et **en ce que** le capteur d'état (54) est raccordé à l'unité de contrôle (40) qui tient compte d'un signal d'état pour la formation du signal de contrôle.

**Claims**

1. A vehicle brake system with:

    - a main supply pump (22),
    - at least one service brake (12, 14),
    - a service brake valve (16) which is connected to the main supply pump (22) and the service brake (12, 14) and which controls the service brake (12, 14) in dependence on driver operations and
    - at least one secondary brake (30, 32)

    **characterized by** an electro-hydraulic secondary brake valve (34) which controls the secondary brake (30, 32) in dependence on an electronic signal, at least one service brake sensor (44, 46) which generates signals representing the operating status of the service brake (12, 14), a service brake pressure sensor (42) for generating a service brake pressure signal representing the brake pressure of the service brake (12, 14), a secondary brake pressure sensor (48) for generating a secondary brake pressure signal representing the brake pressure of the secondary brake (30, 32), and an electronic control unit (40) to which are connected the service brake sensor (44, 46), the brake pressure sensors (42, 48) and the secondary brake valve (34), wherein the control unit (40) generates a control signal as a function of the operating status of the service brake (12, 14) and the brake pressure signals.

2. A vehicle brake system according to claim 1, **characterized in that** the main supply pump (22) is in the form of a hydraulic pump.

3. A vehicle brake system according to claim 1 or 2, **characterized in that** a secondary adjustable supply pump (36) is included.

4. A vehicle brake system according to any of the preceding claims, **characterized in that** the service brake (12, 14) includes left and right service brakes, wherein each is coupled operatively through the service brake valve (16) to an associated left and right service brake pedal (18, 20).

5. A vehicle brake system according to any of the preceding claims, **characterized in that** the driver operations are effected by actuation of at least one brake pedal (18, 20).

6. A vehicle brake system according to any of the preceding claims, **characterized in that** the secondary brake valve (34) comprises a proportional pressure reducing valve controlled by a magnetic coil.

7. A vehicle brake system according to any of the preceding claims, **characterized in that** the service brake sensor (44, 46) includes left and right service brake switches, whereof each is coupled to the corresponding left and right brake pedal (18, 20).

8. A vehicle brake system according to any of the preceding claims, **characterized in that** a manually operable brake lever (50) is included.

9. A vehicle brake system according to claim 8, **characterized in that** a brake lever position sensor (52) is included and supplies the electronic control unit (40) with a brake lever position signal, wherein the electronic control unit (40) generates the control signal as a function of the operating status of the service brake, the brake pressure signals and the brake lever position signal.

10. A vehicle brake system according to claim 8 or 9, **characterized in that** a status sensor (54) is provided and detects whether the brake lever (50) is in a datum position or is moved out of this and **in that** the status sensor (54) is connected to the control unit (40), which takes a status signal into account in generating the control signal.